# EUROPÄISCHE PATENTSCHRIFT

(11) **EP 1 431 699 B1**
(45) Veröffentlichungstag und Bekanntmachung des Hinweises auf die Patenterteilung: **25.06.2008**
(21) Anmeldenummer: 03021966.1
(22) Anmeldetag: 30.09.2003
(51) Int. Cl.: F41G 1/38, G02B 23/14

(54) **Zielfernrohr**
Telescopic sight
Lunette de visée

(30) Priorität: 16.12.2002 DE 10258733
(43) Veröffentlichungstag der Anmeldung: 23.06.2004
(73) Patentinhaber: Carl Zeiss Sports Optics GmbH, 35576 Wetzlar (DE); Carl Zeiss Optronics Wetzlar GmbH, 35576 Wetzlar (DE)
(72) Erfinder: Schlierbach, Armin, 35638 Leun (DE)
(74) Vertreter: Lorenz, Werner

(56) Entgegenhaltungen:
- DE-B- 1 012 220
- US-A- 3 990 155

## Beschreibung

Die Erfindung betrifft ein Zielfernrohr mit einem Objektiv, einem Okular und einem Umkehrsystem, das in einem rohrförmigen Gehäuse im Fernrohrtubus kippbar zwischen dem Objektiv und dem Okular angeordnet ist, wobei die Kippung des Umkehrsystems durch zwei in einem annähernd rechten Winkel zueinander angeordnete Verstelltürme mit je einer Elevationsschraube verstellbar ist und wobei wenigstens eine Elevationsschraube im Bereich ihrer Kuppe mit einer radialen Ausnehmung versehen ist.

Ein derartiges Objektiv ist aus der US 3,990,155 bekannt.

Bei bekannten Zielfernrohren, beispielsweise zum Einsatz in Gewehren, wird das anvisierte Ziel in der Objektivebene, in der häufig auch die Strichplatte (das Absehen) eingebracht ist, seitenverkehrt und auf dem Kopf stehend abgebildet. Ein optisches Umkehrsystem, das üblicherweise in einem rohrförmigen Gehäuse im Fernrohrtubus angeordnet ist, richtet das Bild auf und bildet es in der Okularebene ab, wo es mit dem Okular betrachtet wird. Durch Verschieben der optischen Glieder des Umkehrsystems wird eine variable Vergrößerung erreicht. Um am Gewehrzielfernrohr Seiten- und Höhenkorrekturen einstellen zu können, muss das rohrförmige Gehäuse des Umkehrsystems nach allen Seiten beweglich im Fernrohrtubus montiert sein. Dazu wird bei bekannten Zielfernrohren ein Kugelgelenk des Umkehrsystems mittels Kegelpfanne und Kugellagerausgleichsscheibe abgestimmt. Eine Feder im Bereich der Elevationsschrauben bringt die erforderliche Rückstellkraft auf und sorgt so dafür, dass das Umkehrsystem um den Drehpunkt des Kugelgelenks gegen die Elevationsschrauben gedrückt wird.

Durch die zwischen dem Umkehrsystem und dem Hauptrohr angeordneten Federn wird der Justierweg deutlich eingeschränkt, wodurch sich bei den herkömmlichen Fernrohren ein zu kurzer Justierweg und damit starke Abstriche beim Ausrichten/Zielen bzw. beim Schießen mit der Waffe vor allem bei größeren Zielentfernungen ergeben.

Der vorliegenden Erfindung liegt daher die Aufgabe zugrunde, ein Zielfernrohr der eingangs erwähnten Art zu schaffen, das die Nachteile des Standes der Technik löst, insbesondere große Justierwege und damit ein genaues Zielen bzw. Schießen über große Distanzen ermöglicht, wobei auf den Einsatz von Rückstellfedern verzichtet werden soll.

Erfindungsgemäß wird diese Aufgabe dadurch gelöst, dass beide Elevationsschrauben jeweils im Bereich ihrer Kuppe mit einer radialen Ausnehmung versehen sind, wobei das Umkehrsystem im Bereich der Verstelltürme zwei Gleitflächen für Höhe und Seite und jeweils darüber angeordnete Eingriffelemente aufweist, die in die Ausnehmungen der Elevationsschrauben eingreifen und welche die Elevationsschrauben zur Erzeugung der Rückstellkraft gegen die jeweilige Gleitfläche drücken.

Durch diese Maßnahmen wird in einfacher und vorteilhafter Weise ein Zielfernrohr geschaffen, bei dem das Umkehrsystem formschlüssig mit den Elevationsschrauben verbunden ist, der Einsatz einer Feder zur Erzeugung der Rückstellkraft kann entfallen, wodurch ein genaues Zielen bzw. Schießen auch über große Distanzen ermöglicht wird, da die Justierwege für das Umkehrsystem nicht eingeschränkt sind.

Erfindungsgemäß kann ferner vorgesehen sein, dass die Eingriffelemente als federnde Elemente, insbesondere als Klammern ausgebildet sind.

Dadurch kann das Umkehrsystem einfach und kostengünstig im Zielfernrohr montiert werden. Die eingesetzten federnden vorzugsweise leicht vorgespannten Klammern tauchen in die Einstiche der Elevationsschrauben ein und drücken die Kuppe der Schraube sanft gegen die Gleitflächen. Durch das Federn der Klammern wird eine einfache Montage bei gleichzeitigem festen Sitz des Umkehrsystems im Zielfernrohr erreicht.

Vorteilhaft ist, wenn die Eingriffelemente als ausgebogene Vorsprünge eines auf das Umkehrsystem aufbringbaren Rings ausgebildet sind.

Durch diese Maßnahme kann das Umkehrsystem in einer schnellen und kostengünstigen Fertigung mit den erforderlichen Eingriffelementen versehen werden, da der Ring einfach nur gestanzt und anschließend lediglich die Klammern daraus ausgebogen werden müssen, wonach er auf das Umkehrsystem aufgebracht werden kann.

Vorteilhafte Ausgestaltungen und Weiterbildungen ergeben sich aus den nachfolgend anhand der Zeichnung prinzipmäßig beschriebenen Ausführungsbeispielen.

Es zeigt:
- Figur 1: eine prinzipmäßige Schnittansicht eines erfindungsgemäßen Fernrohrs;
- Figur 2a: eine perspektivische Ansicht eines Rings mit Eingriffelementen;
- Figur 2b: eine Seitenansicht des Rings mit Eingriffelementen aus Fig. 2a; und
- Figur 3: einen vergrößerten Ausschnitt einer prinzipmäßigen Schnittdarstellung eines zweiten erfindungsgemäßen Zielfernrohrs im Bereich eines Verstellturms.

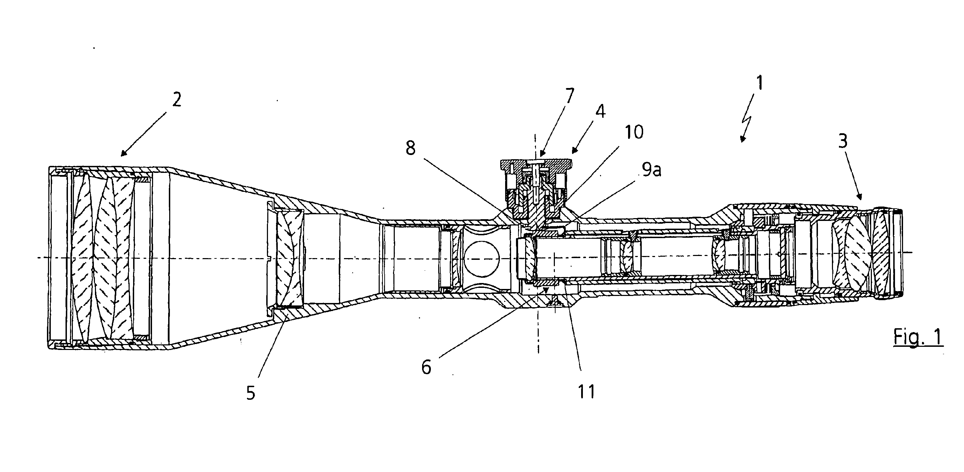

Wie aus Figur 1 ersichtlich, weist ein erfindungsgemäßes Zielfernrohr 1 ein Objektiv 2 und ein Okular 3 sowie einen Verstellturm 4 zur Kippung des im Zielfernrohrtubus 5 gelagerten Umkehrsystemtubus 6 auf. Der Verstellturm 4 weist zur Höhenverstellung des Umkehrsystemtubus 6 eine Elevationsschraube 7 auf, die umlaufend mit einer radialen Ausnehmung 8 versehen ist, in die eine am Umkehrsystemtubus 6 angeordnete vorgespannte Klammer 9a eingreift, um die Kuppe der Elevationsschraube 7 gegen eine Gleitfläche 10 des Umkehrsystemtubus 6 zu drücken, wodurch die erforderliche Rückstellkraft zur Einstellung des Umkehrsystemtubus 6 erzeugt wird. Das Umkehrsystem 6 ist formschlüssig mit der Elevationsschraube 7 verbunden, daher kann in einfacher und vorteilhafter Weise auch auf Rückstellfedern zur Aufbringung der Rückstellkraft verzichtet werden. Die seitliche Einstellung des Umkehrsystemtubus 6 im Zielfernrohrtubus 5 erfolgt analog zur Höhenverstellung mittels des Verstellturms 4 durch einen in Figur 1 nicht sichtbaren seitlichen Verstellturm, der ebenfalls eine Elevationsschraube mit einer radialen Ausnehmung an ihrer Kuppe zur Aufnahme einer Klammer aufweist, die den Umkehrsystemtubus 6 seitlich mit einer Gleitfläche des Umkehrsystemtubus 6 gegen die Kuppe der Elevationsschraube drückt und somit auch seitlich die erforderliche seitliche Rückstellkraft aufbringt.

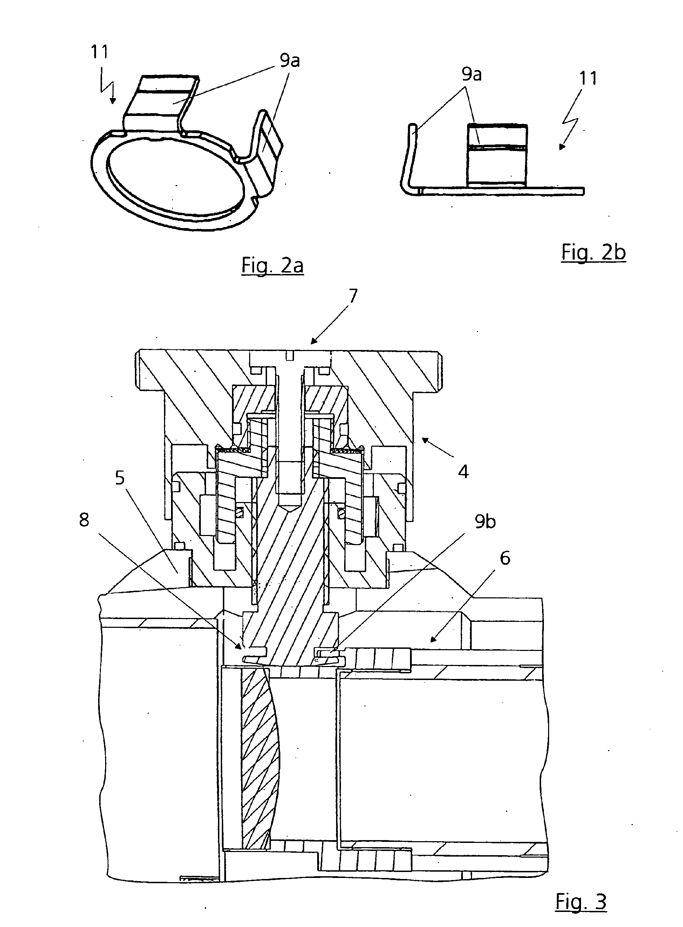

Ein auf den Umkehrsystemtubus 6 aufgebrachter Ring 11 trägt die Klammer 9a. Wie aus den Figuren 2a und 2b ersichtlich, sind die Klammern 9a senkrecht zur Ringfläche des Rings 11 aufgebogen.

Figur 3 zeigt einen vergrößerten Ausschnitt einer zweiten konstruktiven Variante eines erfindungsgemäßen Zielfernrohrs im Bereich des Verstellturms 4. Auf die Darstellung des gesamten Zielfernrohrtubus 5 mit Okular und Objektiv wurde verzichtet, da sie analog zu Figur 1 ist. Wie aus Figur 3 ersichtlich, wurde eine Klammer 9b als Eingriffelement direkt aus dem Umkehrsystemtubus 6 herausgearbeitet, diese greift in die radiale Ausnehmung 8 der Elevationsschraube 7 des Verstellturms 4 ein, wodurch auch in dieser Ausführungsform die notwendige Rückstellkraft erzeugt wird.

## Patentansprüche

1. Zielfernrohr (1) mit einem Objektiv (2), einem Okular (3) und einem Umkehrsystem (6), das in einem rohrförmigen Gehäuse im Fernrohrtubus kippbar zwischen dem Objektiv (2) und dem Okular (3) angeordnet ist, wobei die Kippung des Umkehrsystems (6) durch zwei in einem annähernd rechten Winkel zueinander angeordnete Verstelltürme (4) mit je einer Elevationsschraube (7) verstellbar ist und wobei wenigstens eine Elevationsschraube (7) im Bereich ihrer Kuppe mit einer radialen Ausnehmung (8) versehen ist, **dadurch gekennzeichnet, dass** beide Elevationsschrauben (7) jeweils im Bereich ihrer Kuppe umlaufend mit einer radialen ringförmigen Ausnehmung (8) versehen sind, wobei das Umkehrsystem (6) im Bereich der Verstelltürme (4) zwei Gleitflächen (10) für Höhe und Seite und jeweils darüber angeordnete Eingriffelemente (9a,9b) aufweist, die in die Ausnehmungen (8) der Elevationsschrauben (7) eingreifen und welche die Elevationsschrauben (7) zur Erzeugung der Rückstellkraft gegen die jeweilige Gleitfläche (10) drücken, und wobei die Kuppenflächen der Elevationsschrauben (7) gegen die jeweilige Gleitfläche (10) gedrückt sind.

2. Zielfernrohr nach Anspruch 1, **dadurch gekennzeichnet, dass** die Eingriffelemente als federnde Elemente (9a,9b) ausgebildet sind.

3. Zielfernrohr nach Anspruch 2, **dadurch gekennzeichnet, dass** die federnden Elemente als Klammern (9a,9b) ausgebildet sind.

4. Zielfernrohr nach Anspruch 1, 2 oder 3, **dadurch gekennzeichnet, dass** die Eingriffelemente als ausgebogene Vorsprünge (9a) eines auf das Umkehrsystem (6) aufbringbaren Rings (11) ausgebildet sind.

## Claims

1. Telescopic sight (1) having an objective lens (2), an eyepiece (3) and an inversion system (6), which is arranged between the objective lens (2) and the eyepiece (3) so that it can be tilted in a tubular housing in the scope tube, the tilting of the inversion system (6) being adjustable by two adjustment turrets (4) arranged approximately at a right angle to one another and each having an elevation screw (7), and at least one elevation screw (7) being provided with a radial recess (8) in the region of its tip, **characterised in that** the two elevation screws (7) are respectively provided circumferentially with a radial annular recess (8) in the region of their tip, the inversion system (6) having two glide surfaces (10) for height and side adjustment in the region of the adjustment turrets (4) as well as engagement elements (9a, 9b) respectively arranged on them, which engage into the recesses (8) of the elevation screws (7) and which press the elevation screws (7) against the respective glide surface (10) in order to generate the restoring force, and the tip surfaces of the elevation screws (7) being pressed against the respective glide surface (10).

2. Telescopic sight according to Claim 1, **characterised in that** the engagement elements are designed as resilient elements (9a, 9b).

3. Telescopic sight according to Claim 2, **characterised in that** the resilient elements (9a, 9b) are designed as clips.

4. Telescopic sight according to Claim 1, 2 or 3, **characterised in that** the engagement elements are designed as turned-back projections (9a) of a ring (11) which can be applied onto the inversion system (6).

## Revendications

1. Lunette de visée (1) avec un objectif (2), un oculaire (3) et une optique d'inversion (6) disposée de manière pivotante dans un boîtier tubulaire entre l'objectif (2) et l'oculaire (3), dans laquelle le pivotement de l'optique d'inversion (6) est réglable grâce à deux tourelles de réglage (4) disposées selon un angle presque droit entre elles et comportant chacune une vis de réglage de la hausse (7) et dans laquelle au moins une vis de réglage de la hausse (7) est pourvue, au niveau de son sommet, d'un évidement radial (8), **caractérisée en ce que** les deux vis de réglage de la hausse (7) sont pourvues, au niveau de leur sommet et sur leur circonférence, d'un évidement radial annulaire (8), l'optique d'inversion (6) comprenant, au niveau des tourelles de réglage (4), deux surfaces de coulissement (10) pour le réglage en hauteur et le réglage latéral ainsi que des éléments d'emboîtement (9a, 9b) disposés sur chacune de celles-ci, qui s'emboîtent dans les évidements (8) des vis de réglage de la hausse (7) et qui compriment les vis de réglage de la hausse (7) contre la surface de coulissement (10) correspondante afin de générer la force de rappel, et les surfaces des sommets des vis de réglage de la hausse (7) étant comprimées contre la surface de coulissement (10) correspondante.

2. Lunette de visée selon la revendication 1, **caractérisée en ce que** les éléments d'emboîtement sont conçus comme des éléments élastiques (9a, 9b).

3. Lunette de visée selon la revendication 2, **caractérisée en ce que** les éléments élastiques sont conçus comme des pattes (9a, 9b).

4. Lunette de visée selon la revendication 1, 2 ou 3, **caractérisée en ce que** les éléments d'emboîtement sont conçus comme des saillies repliées (9a) d'une bague (11) pouvant être disposée sur l'optique d'inversion (6).
